# EUROPEAN PATENT APPLICATION

(11) **EP 1 074 815 A1**
(43) Date of publication of application: **07.02.2001**
(21) Application number: 00116219.7
(22) Date of filing: 04.08.2000
(51) Int. Cl.: G01B 7/02, G01B 7/00, G01D 5/14, G01D 5/16

(54) **Biaxial Magnetic Position Sensor**

(30) Priority: 04.08.1999 US 147113
(71) Applicant: FESTO AG & Co, 73734 Esslingen (DE); NONVOLATILE ELECTRONICS, INCORPORATED, Eden Prairie, MN 55344 (US)
(72) Inventor: Hanisch, Christoph, D-73734 Esslingen (DE); Brown, Jay L., Rogers, MN 55374 (US); Reininger, Thomas, Dr., D-73240 Wernau (DE); Daughton, James M., Eden Prairie, MN 55347 (US)
(74) Representative: Vetter, Hans, Dipl.-Phys. Dr.

(57) **Abstract**

A sensing system for sensing a moveable magnetic field source becoming located sufficiently near a selected position through sensing the magnetic field generated by this source. The system has a first sensor to sense a first vectorial component of the magnetic field and provide a corresponding output signal, and a second sensor to sense a second and different vectorial component of the magnetic field and also provide a corresponding output signal. A signal manipulator receives the first and second sensor output signals and provides a manipulator result signal based on them that is indicative of how near the moveable magnetic field source is to the selected position.

## Description

### CROSS-REFERENCE TO RELATED APPLICATION

This application claims priority from Provisional Application No. 60/147,113, filed August 4, 1999, entitled "Two Axis Sensor for Cylinder Position."

### BACKGROUND OF THE INVENTION

The present invention relates to position attainment verification systems for ascertaining whether moveable mechanical objects have reached selected positions and, more particularly, to such systems using magnetic sensing of a magnetic field moving with the moveable object.

Many useful mechanical arrangements have moving parts within them that are constrained to move over corresponding selected paths relative to other portions of the arrangement. In many situations, knowledge of the location of such a moving part along its path is desired, or at least the knowledge that a certain position or positions have been attained. Such knowledge may be useful for counting path traversals, initiating corresponding other actions in the system at certain path points, providing information for a feedback loop, limiting travel between end points, and the like.

A typical arrangement involves a piston moving in a cylinder capped at either end, and having a rod, connected between the piston and a load, passing back and forth through an opening in the cap on one of the ends. The position of the piston, and so of the load, is varied by variably forcing a working fluid, such as air, against one side or the other of the piston to in turn force the piston from one position to another in the cylinder. Thus, the piston and cylinder arrangement can serve as a positioner for positioning the load as desired, and knowledge of the position of the piston indicates also the position of the load.

Due to necessary pressures in the working fluid, the cylinder is usually a strongly built cylindrical shell thus obscuring the position of the piston from exterior view. Hence, there is a desire to have a system to determine when such a piston sufficiently closely reaches one or more positions over its permitted path of travel, and to have such determinations be represented to users by indicator signals.

### BRIEF SUMMARY OF THE INVENTION

The present invention provides a sensing system for sensing a moveable magnetic field source becoming located sufficiently near a selected position through sensing the magnetic field generated by this source. The system has a first sensor to sense a first vectorial component of the magnetic field and provide a corresponding output signal, and a second sensor to sense a second and different vectorial component of the magnetic field and also provide a corresponding output signal. A signal manipulator receives the first and second sensor output signals and provides a manipulator result signal based on them that is indicative of how near the moveable magnetic field source is to the selected position through combining these signals in a selected manner such as, for instance, by adding or subtracting them, or following some other mathematical combination relationship. The sensing system can be used on a substantially nonmagnetic material piston and cylinder arrangement having the magnetic field source on the piston.

The sensors can be mounted with magnetically sensitive axes perpendicular to one another on a common substrate provided by a monolithic integrated circuit with the circuit therein interconnected to these sensors. They may be interconnected using a bridge circuit with a differential amplifier and threshold comparator, or provide signals separately to other electronic circuits that provide some selected combining relationship.

### BRIEF DESCRIPTION OF THE DRAWINGS

Figures 1A, 1B and 1C schematically show the present invention in a typical use situation,
Figures 2A and 2B show representations of typical field component characteristics occurring in the arrangement of Figure 1,
Figure 3 shows a representation of another typical field component characteristic occurring in the arrangement of Figure 1,
Figures 4A and 4B show a representation of an effective combined typical field component characteristic selected to be provided in the arrangement of Figure 1 and corresponding measured combined outputs of sensors in this arrangement,
Figures 5A and 5B show a representation of another effective combined typical field component characteristic selected to be provided in the arrangement of Figure 1 and corresponding measured combined outputs of sensors in this arrangement,
Figures 6 and 7 show schematic alternative layouts of sensor arrangements, and
Figures 8,9 and 10 show alternative combining arrangements for the sensors of Figures 6 and 7.

### DETAILED DESCRIPTION

Providing indications of the position of a piston in a cylinder to exterior users can be accomplished by placing a magnetic field source within the piston so that a substantially fixed magnetic field pattern with respect to the piston extends exterior to the cylinder and travels with the piston to permit external sensing of the piston position so long as the cylinder and any sufficiently nearby structures are not of magnetically permeable materials. Thus, for instance, an air operated piston and cylinder arrangement formed from aluminum or stainless steel, or the like, could be used in such a piston position ascertainment system.

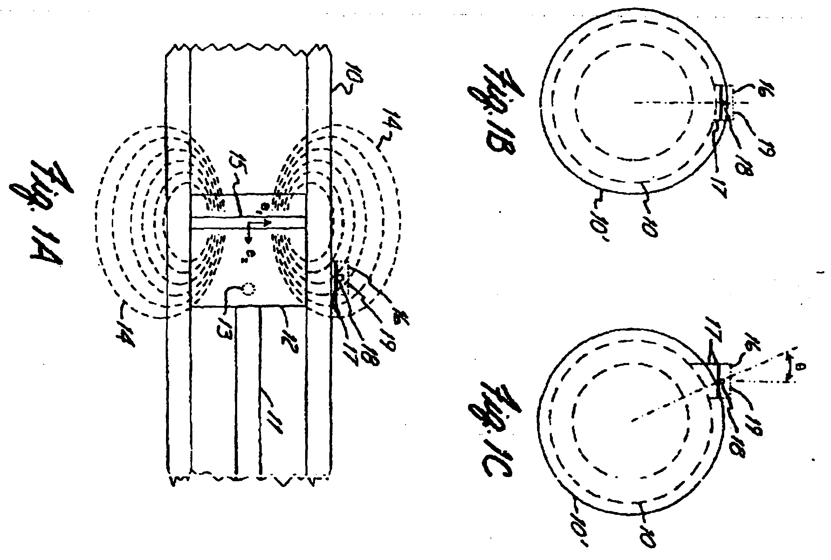

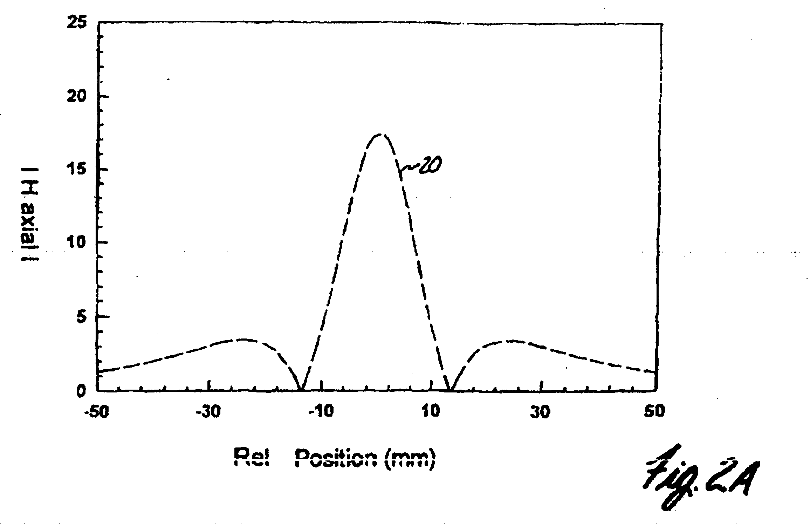

Alternative examples of such an arrangement are shown in the views of Figure 1. Figure 1A shows a partially cross sectioned elevation view of a portion of a cylinder, or cylindrical shell, 10, having shown partially therein a shaft, 11, connected to a piston, 12, shown fully in the cylinder, this connection made by some connection means,13. The opposite end of shaft 11 is connected to a mechanical load of some sort not seen in the figure. Also not shown are pressurized air conduits, valves, pumps, cylinder orifices and the like required to bring pressurized air alternatively to one side or the other of piston 12 to force its movement to various positions in cylinder 10 as selected by the user.

Dashed lines, 14, are used to represent a magnetic field provided by a ring shaped ceramic magnet, 15, positioned about piston 12. This field arises as shown because of cylinder 10, shaft 11 and piston 12 being of materials which are not magnetically permeable, and because magnet 15 is poled so as to have the ring portions to the left in Figure 1A of the ring circular circumferential center line positioned halfway between its ends (not shown) serving as the ring magnet north pole and the ring portions to the right thereof serving as the ring magnet south pole. The same field, though oppositely directed, would be present if the magnetic polarity of ring magnet 15 were to be reversed.

As can be seen, magnetic field 14 extends past the shell of cylinder 10 to regions exterior thereto. Mounted on cylinder 10 in such regions is a piston position indicator system, 16, having therein a substrate, 17, on which a monolithic integrated circuit magnetic field sensing chip mounting arrangement, 18, is supported, and which is covered by an appropriate covering means, 19, shown in dashed line form so as not to obscure chip mounting arrangement 18.

Two alternative end views of the arrangement of Figure 1A are shown in Figures 1B and 1C. In Figure 1B, an end cap, 10', can be seen over the end of cylinder 10 opposite the end enclosed by the end cap through which shaft 11 protrudes. Piston position indicator system 16 is shown radially mounted on cylinder 10 so that a radius (shown in alternating dot and dashed line form) of that cylinder extended would pass through the thickness of the sensing chip in mounting arrangement 18 without crossing either major surface thereof, one of which major surfaces is seen in Figure 1A. That is, the major surfaces of the sensing chip in mounting arrangement 18 are parallel to a radius therethrough of cylinder 10. In Figure 1C, on the other hand, piston position indicator system 16 is mounted to the side of cylinder 10 so that a vertical line (shown in alternating double dot and dashed line form) parallel to the major surfaces of the sensing chip in mounting arrangement 18 does not pass through the center of cylinder 10. This situation results in a radius of cylinder 10 extended through the sensing chip in mounting arrangement 18 making an angle, θ, with the local vertical line shown and with the major surfaces of the sensing chip in mounting arrangement 18. Either mounting for piston position indicator system 16 on cylinder 10 can occur in practice.

If a spatial coordinate system is established with its origin at the point of zero length radius from the center of cylindrical shell 10 directly below mounting arrangement 18 in Figure 1A, a calculation of magnetic field 14 at the position of mounting arrangement 18 can be made versus the lateral position of the center of the circular circumferential center line of ring magnet 15, moving with piston 12, with respect to this origin. Such a calculation is conveniently made using cylindrical coordinates because of the cylindrical symmetry of cylindrical shell 10, piston 12 and ring magnet 15, and can be accomplished based on finite element calculation methods. Because of this symmetry, the angular cylindrical coordinate does not have any effect on the result so that only the radial and axial magnetic field components along unit vectors →eᵣ and →e_{z} indicated in Figure 1A are of interest. The absolute values of these magnetic field components are designated |H_{radial}| and |Hₐₓᵢₐₗ|, respectively.

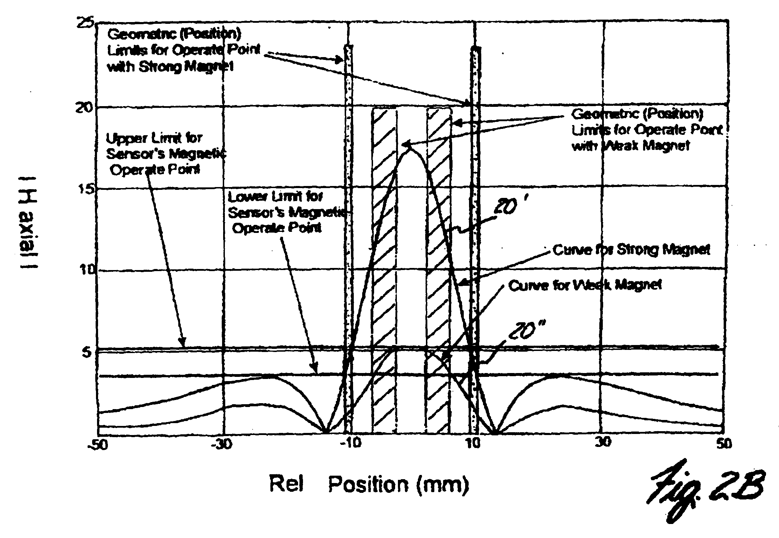

Figure 2A is a graph showing a characteristic plot, 20, of the absolute value of Hₐₓᵢₐₗ at the position of the sensing chip in mounting arrangement 18, or the absolute value of the axial component field strength, versus the lateral position, or displacement distance, of the center of the circular circumferential center line of ring magnet 15 with respect to the coordinate system origin. The sensing chip in mounting arrangement 18 is located directly above position of zero displacement on the position axis in this figure. The position is given in millimeters with the magnetic field being given in Oersteds.

This axial magnetic field plot shows over the range of displacement distances a central major peak of a relatively large magnitude value separating two smaller minor peaks on either side thereof. However, this plot is of just one piston position ascertainment system situation in practice, whereas many system permutations in such situations can occur all of which leads to the possibility of substantial variations from what is shown in Figure 2A in the magnitudes of the peaks in the corresponding plots of the axial magnetic field components representing those alternative systems. In such other situations, for instance, the sensing chip in mounting arrangement 18 maybe separated further from ring magnet 15 in position zero then in the situation used to calculate the plot in Figure 2A, and ring magnets will vary from one another in the magnetic source strength that they provide. In many piston position ascertainment systems, there will be a desire to sense only the central major peak as the piston is moved by the sensor during use because it is the peak most closely conformed to the center of ring magnet 15 on piston 12, and so provides the most accurate positioning information of the location of ring magnet 15 with respect to the sensing chip in mounting arrangement 18. In situations of opposite system extremes, one extreme has a strong field ring magnet is provided on piston 12 with the sensing chip in mounting arrangement 18 located relatively nearby when piston 12 positions that magnet immediately adjacent to that chip. The magnitudes of the minor peaks of the axial magnetic field component plot for this situation can be nearly as great as the magnitude of the major central peak in the other extreme situation in which a relatively weak magnetic field is generated by ring magnet 15 with the sensing chip in mounting arrangement 18 being located relatively distantly from ring magnet 15 when it is positioned by piston 12 immediately adjacent thereto.

Figure 2B is a graph showing plots of the two axial magnetic field components for the piston position ascertainment systems of these two extreme situations. The plot in the strong magnet situation is labeled 20' while the plot in the weak magnetic field situation is labeled 20''. The magnitude differences between these two plots are quite large even though each exhibits a system characteristic with an overall form much like that of the other. As can be seen, the magnitude separation between the major central peak of weak magnet system characteristic 20'' and the minor peaks occurring in strong magnet system characteristic 20' is quite small relative to the magnitude of the major central peak of strong magnet system characteristic 20'.

This small magnitude separation result can present a problem if only major central peaks are to be detected, and this is to be done for every piston position ascertainment system using an identical fixed magnitude threshold for assessing the axial magnetic field component on the basis of whether this field component exceeds the chosen effective field threshold value to thereby determine if ring magnet 15 is sufficiently close to the sensing chip in mounting arrangement 18. The piston position ascertainment systems must have a threshold value chosen that is very reliably maintained in this narrow separation region over temperature and supply voltage variations to avoid the occurrence of major central peak sensing errors.

As shown in Figure 2B, if the threshold is exceeded by Hₐₓᵢₐₗ only when it is located between the two magnitude operating point limits shown by the horizontal lines, central peaks will always be detected and no minor peaks will be mistakenly detected as a major peak as desired. However, if the threshold is exceeded only by Hₐₓᵢₐₗ above the upper magnitude operating point limit, some central major peaks of some systems with weaker ring magnets, or relatively larger separations between the ring magnet therein and the sensing chip, or both, will not be detected since they will fail to exceed such a threshold, Alternatively, if the threshold is exceeded by Hₐₓᵢₐₗ below the lower magnitude operating point limit, some minor peaks of some systems with stronger ring magnets, or relatively smaller separations between the ring magnet therein and the sensing chip, or both, will be mistakenly detected as major peaks as they will exceed the threshold.

Further, the relative position of magnet 15 with respect to the origin of the coordinates directly below the sensing chip in mounting arrangement 18 after its positioning by piston 12 to have its Hₐₓᵢₐₗ exceed the chosen threshold will Very significantly depending on the strength of ring magnet 15 and the remoteness of sensor arrangement 18 even when the detection threshold set by the chip in mounting arrangement 18 is located correctly in the proper magnitude separation limits indicated above. The displacement distance offset limits in Figure 2B for piston 12 with magnet 15 from the coordinate system origin are much greater in the instance of strong magnet plot 20' than they are for weak magnet plot 20''. This results in a switching length, i.e. the distance about the origin of the coordinate system immediately below the sensing chip in mounting arrangement 18 over which the detection threshold is exceeded assuming no hysteresis, that is determined by the particular sensing chip mounting arrangement 18-magnet 15 combination. This switching length is determined by the relative positions of magnet 15 and the sensing chip in mounting arrangement 18 at the origin of the coordinates and the strength of magnet 15 when assembled, and is not thereafter adjustable. In many situations, there is an advantage to have a switching length that is best suited for the situation, or at least selectable as to its extent, with it being short for high position resolution and longer for fast moving pistons to give them more time with the threshold value being exceeded when near the coordinates origin. Thus, sensing just Hₐₓᵢₐₗ using fixed threshold detection is not an ideal way of operating a piston position ascertainment system.

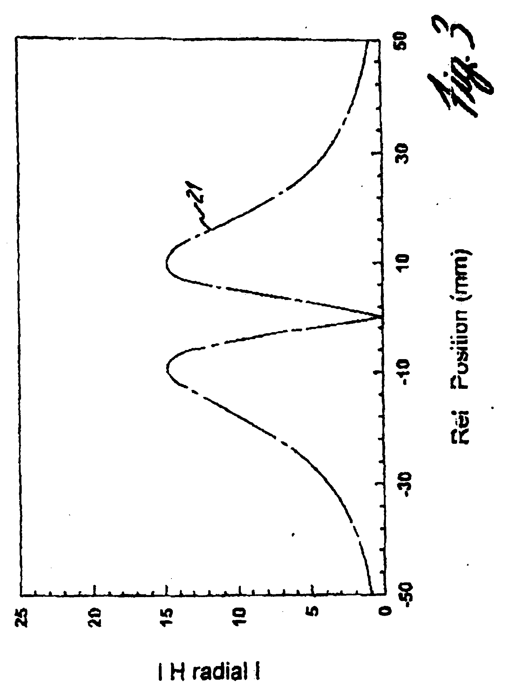

The graph of Figure 3 shows a calculated plot of the absolute value of the radial magnetic field component H_{radial} as a function of the relative position, i.e displacement distance, between the center of the circular circumferential center line of ring magnet 15 and the origin of the coordinates directly below the sensing chip in mounting arrangement 18. This plot shows over the range of displacement distances a pair of maximum magnitude peaks located on either side of the zero coordinate position such that each is located proximately at the same displacement distance of ring magnet 15 from the origin of the coordinates as are the "valleys", or minimum points, between the major central peak in the axial magnetic field component plot of Figure 2A and the two minor peaks therein on either side of that central peak. Clearly, using a fixed threshold detector would lead, in this situation based on assessing H_{radial}, to the detecting of the position of ring magnet 15 on piston 12 at locations relatively far from the origin of the coordinates immediately below the sensing chip in mounting arrangement 18.

However, if both the axial magnetic field component and the radial magnetic field component of magnetic field 14 generated by ring magnet 15 on piston 12 are sensed by the sensing chip in mounting arrangement 18 as piston 12 moves back and forth within cylindrical shell 10, the sensing system in the sensing chip in mounting arrangement 18 is not limited to using an output signal representing just one or the other of these measured magnetic field components in determining the position of ring magnet 15. Rather, the signals generated in the sensing chip in mounting arrangement 18 representing each of these magnetic field components measured by the corresponding chip sensors can be used together in various ways to improve the performance of the piston position ascertainment system to more nearly meet desires.

That is, the combining of signals representing each of these measured magnetic field components in selected ways, often according to selected, easily implemented mathematical relationships, can provide effectively a new magnetic field strength versus displacement distance characteristics which can have more useful properties for purposes of detection. The new effective magnetic field versus separation distance characteristic can in many instances be determined by combining the individual component magnetic field characteristics in the same manner as the output signals representing their measured values are combined by the sensing system in the sensing chip in mounting arrangement 18.

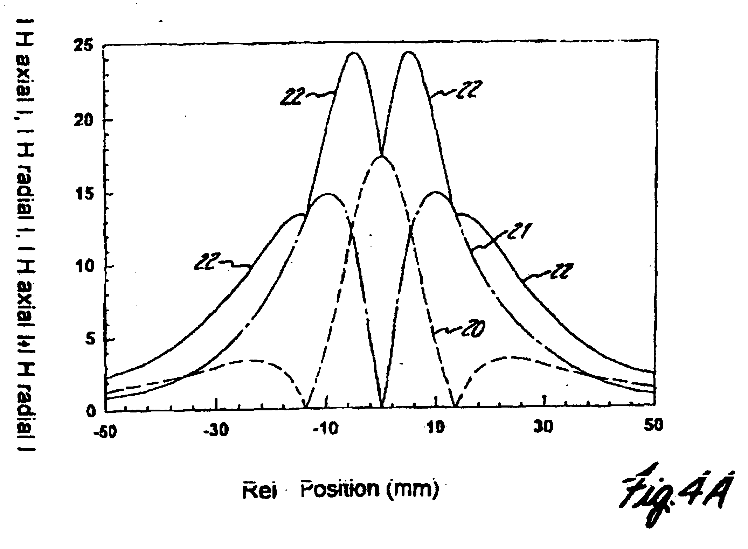

Thus, Figure 4A shows the calculated new effective magnetic field verus displacement distance characteristic, 22, formed by summing the signals representing the absolute values of the axial and radial magnetic field components, i.e. adding together the magnitudes of an axial magnetic field component characteristic, such as characteristic 20, and radial magnetic field component characteristic, such as characteristic 21, for each displacement distance. Because the minimums, or "valleys", between the major central peak of the axial magnetic field component characteristic 20 and its minor peaks occur approximately where the two maximum peaks are located in the radial magnetic field component characteristic 21, there is very little in the way of minor peaks outside of the two major peaks in the resulting effective magnetic field versus displacement distance characteristic 22. As a result, there is significantly more freedom in setting the value of a detection threshold since there no longer need be any concern about minor peaks, as in the axial field component used alone, in a strong magnet, close sensor situation versus using the same sensor in a weak magnet, remote location situation. The switching length of new effective magnetic field versus displacement distance characteristic 22 is relatively long which may be desired in applications in which piston 12 moves at a high rate of speed to give added reaction time in detecting the threshold being exceeded by the arrival nearby of magnet 15 on piston 12.

The effective combined output signal verus displacement distance characteristics resulting from combining the output signals from the axial magnetic component sensor and the radial magnetic component sensor in an actual sensing chip used in mounting arrangement 18 are shown in Figure 4B with different weightings of these two signals being used in forming these four characteristics, 23, 24, 25 and 26. The sensor used to obtain these output characteristics was mounted on an actual pneumatic cylinder having a magnet about the piston therein.

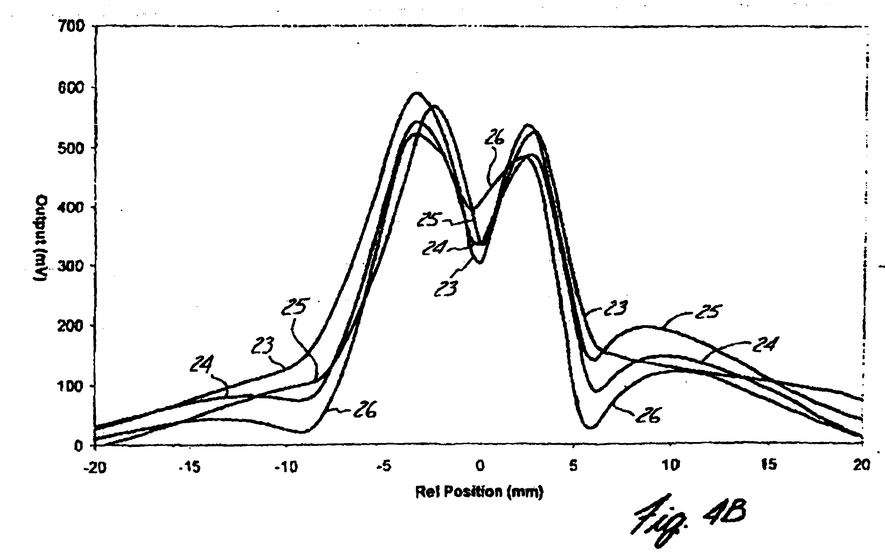

Figure 5A shows the calculated new effective magnetic field verus displacement distance characteristic, 27, formed by subtracting signals representing the absolute value of the radial magnetic field components from the axial magnetic field components, i.e. subtracting the magnitudes of a radial magnetic field component characteristic, such as characteristic 21, from the magnitudes of a radial magnetic field component characteristic, such as characteristic 21, for each displacement distance. Because the minimums, or "valleys", between the major central peak of the axial magnetic field component characteristic 20 and its minor peaks occur approximately where the two maximum peaks are located in the radial magnetic field component characteristic 21, there deep minimums, or "valleys" on either side of the narrow major central peak in characteristic 27. This a resulting characteristic 27 with such a narrow central peak permits very accurate determination of the location of the center of the circular circumferential center line of ring magnet 15 around the origin of the coordinates directly below the sensing chip in mounting arrangement 18.

The effective combined output signal verus displacement distance characteristics resulting from subtracting the output signals of the radial magnetic component sensor from the output signals of the axial magnetic component sensor in an actual sensing chip used in mounting arrangement 18 are shown in Figure 5B with different weightings of these two signals being used in forming these three characteristics, 28, 29 and 30. The sensor used to obtain these output characteristics was mounted on an actual pneumatic cylinder having a magnet about the piston therein.

There are many other ways to combine the output signals from the axial magnetic component sensor and the radial magnetic component sensor in an actual sensing chip used in mounting arrangement 18. As examples, they can be combined with different weightings to yield new effective magnetic strength versus displacement characteristics, such as n|H_{radial}|+|Hₐₓᵢₐₗ|, |H_{radial}|+m|Hₐₓᵢₐₗ| or n|H_{radial}|+m|Hₐₓᵢₐₗ| at each displacement distance, to further modify the resulting effective magnetic strength versus displacement distance characteristics such as to further reduce minor peaks otherwise present. Alternatively, they can be combined with a constant offset signal to provide other new effective magnetic strength versus displacement characteristics, such as |Hradial|+|Haxial|+C, n|Hradial|+|Haxial|+C, |Hradial|+m|Haxial|+C, or n|Hradial|+m|Haxial|+C at each displacement distance, to shift the magnitude with respect to the sensor fixed threshold perhaps to change the effective switching length. Another possibility for new effective magnetic strength versus displacement characteristics to remove negative values or to raise large peaks with respect to smaller peaks is to root-sum-square them as (|H_{radial}|²+|Hₐₓᵢₐₗ|²)^{½} at each displacement distance.

The sensing chip used in mounting arrangement 18 is usually constructed having a monolithic integrated circuit as a substrate for the magnetic field sensors being used which are typically magnetoresistance based sensors, i.e. resistors having resistance values which are a function of the externally applied magnetic fields they are subjected to. They may be magnetoresistors based on either the anisotropic magnetoresistive effect or the "giant" magnetoresistive effect. Alternatively, they may be spin dependent tunneling sensors. Present on the monolithic integrated circuit substrate with these magnetoresistors are flux concentrators to increase the value of the external field to which they are subject during use, arid which are also used to magnetically shield some of the magnetoresistors to thereby maintain them at relatively constant resistance values to be used as ordinary resistors in the circuits. The magnetoresistors used to sense the axial external magnetic field components are to be kept close to those used to sense the radial field components to thus measure approximately the same field point. These sensors are then interconnected and operated by the integrated circuits in the integrated circuit substrates upon which the are positioned.

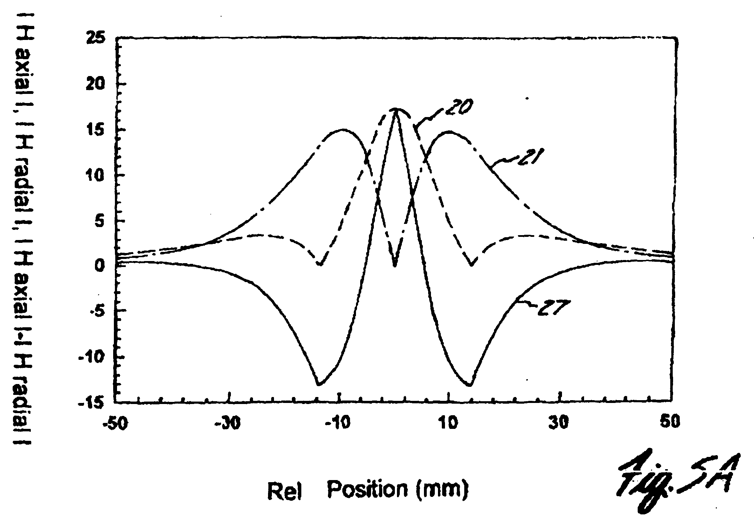

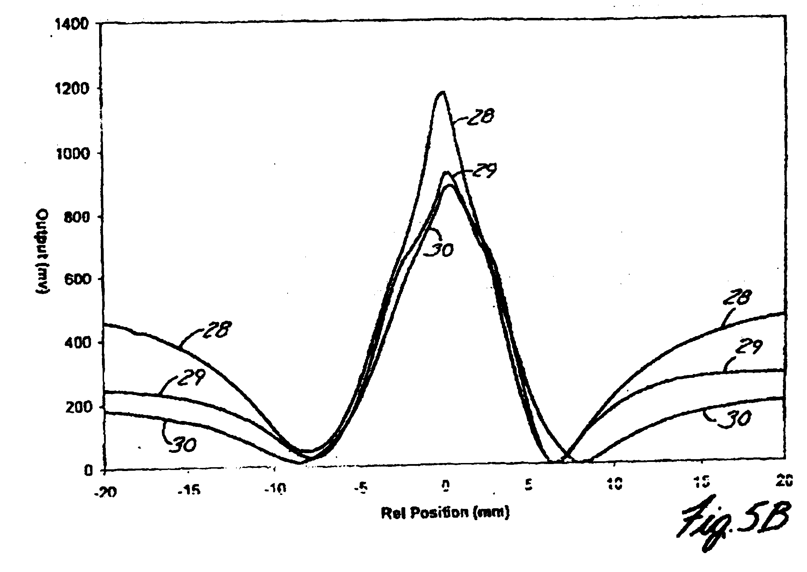

Figures 6 and 7 show schematically two alternative sensor layouts that can be in the sensing chip in mounting arrangement 18 supported on the integrated circuit substrate provided therein. Included are a pair of sensing magnetoresistors, each designated R₁, for sensing the externally applied radial magnetic field component, and a further pair of sensing magnetoresistors, each designated R₂, for sensing the externally applied axial magnetic field component. In addition is another pair of magnetoresistors, each designated R₃, that are shielded by flux concentrators, each designated FC, which are positioned thereover so that they are not subject to externally applied fields in contrast to magnetoresistors designated R₁ and R₂. Magnetically insensitive resistors R₃ are used to provide temperature coefficient offsets for the magnetically sensitive resistors or to effectively provide a weighting to the output signal of one of the magnetically sensitive resistors, or both. Additional shielded magnetoresistors may be provided in some circumstances to better reach such results.

In both of the layouts in Figures 6 and 7, each of the radial magnetic field component sensing magnetoresistors R₁ are located in a path between two flux concentrators and each of the axial magnetic field component sensing magnetoresistors R₂ are located in a path between two flux concentrators. Each of the paths having a radial magnetic field component sensing magnetoresistor R₁ on it has the most magnetically sensitive axis of that resistor aligned with the direction of the path which direction is perpendicular to the direction of each of the paths with a axial magnetic field component sensing magnetoresistor R₂ on it which also have their most magnetically sensitive axis aligned therewith. Such right angle paths for the magnetoresistors are necessary to provide for the sensing of externally applied radial and axial magnetic field components as these components are always at right angles to one another at any point in the field. These two different layouts use different surface areas to support the structures shown and provide somewhat different flux concentrator-resistor geometrical relationships in the externally applied magnetic fields to be sensed.

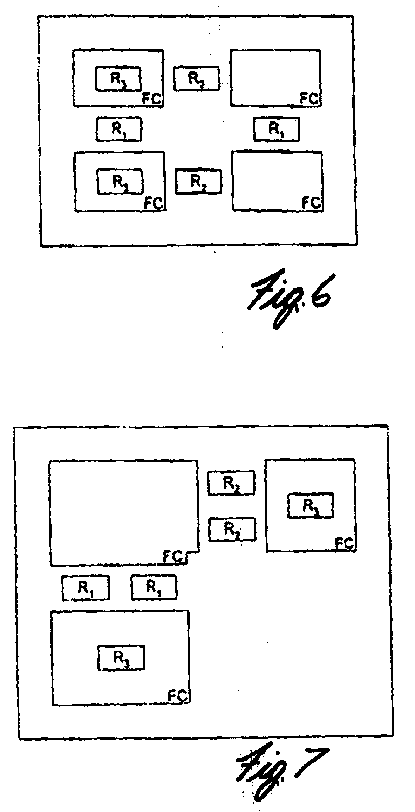

The various resistors in Figures 6 and 7 can be interconnected with one another in various ways, and to external circuits (which may be provided in the integrated circuit substrate of the sensing chip in mounting arrangement 18) to achieve the desired results. One useful resistor interconnection circuit type for these purposes is the bridge circuit which allows differential sensing of the resistive effects resulting from the application of external magnetic fields to the various resistors therein, there being three examples of alternative ones of such circuits shown in Figures 8, 9 and 10.

The bridge circuit of Figure 8 provides addition of the output signals of radial magnetic field component sensing magnetoresistors R₁ and axial magnetic field component sensing magnetoresistors R₂ with shielded resistors R₃ being provided to reduce offsets and the effects of temperature coefficients of the sensing resistors. The differential output voltage, Δvₒ, sensed by a differential amplifier, 31, for one input polarity can be expressed asΔvo = VsR1+R2-R3+ΔR1tc+ΔR2tc-ΔR3tc+ΔR1mr+ΔR2maR1+R2+R3+ΔR1tc+ΔR2tc+ΔR3tc+ΔR1mr+ΔR2ma, with ΔR_{1tc}, ΔR_{2tc} and ΔR_{3tc} being the temperature coefficients of resistors R₁, R₂ and R₃, and ΔR₁ₘᵣ and ΔR₂ₘₐ being the resistance change of resistors R₁ and R₂ due to the radial and axial magnetic field components of the externally applied magnetic field, respectively. The power supply voltage, Vₛ, is the constant value voltage supplied to the bridge circuit node opposite the bridge circuit node connected to the ground reference voltage.

These last two resistance changes due to the externally applied magnetic field components are clearly seen to be added together in the bridge circuit to provide the output signal, and provide essentially the only output signal if resistor R₃ is chosen to have a value equal to the sum of resistors R₁ and R₂. A multiple of this output signal is provided by differential amplifier 31 to a comparator, 32, in which the detection threshold value has been set as a basis for determining whether ring magnet 15 on piston 12 has come sufficiently close to the sensing chip in mounting arrangement 18. This output voltage being approximately proportional to the magnetoresistance change of the sensing resistors, which is in turn due to sensed the radial and axial field components multiplied by the corresponding flux concentration factors FC_{radial} and FCₐₓᵢₐₗ, means the output of differential amplifier 31 is approximately proportional to FCaxial |Haxial|+ FCradial|Hradial| cosθ for properly arranged flux concentrator and sensing resistor geometric relationships where θ is the angle indicated above for the sensing chip in mounting arrangement 18 being positioned away from center on cylinder shell 10.

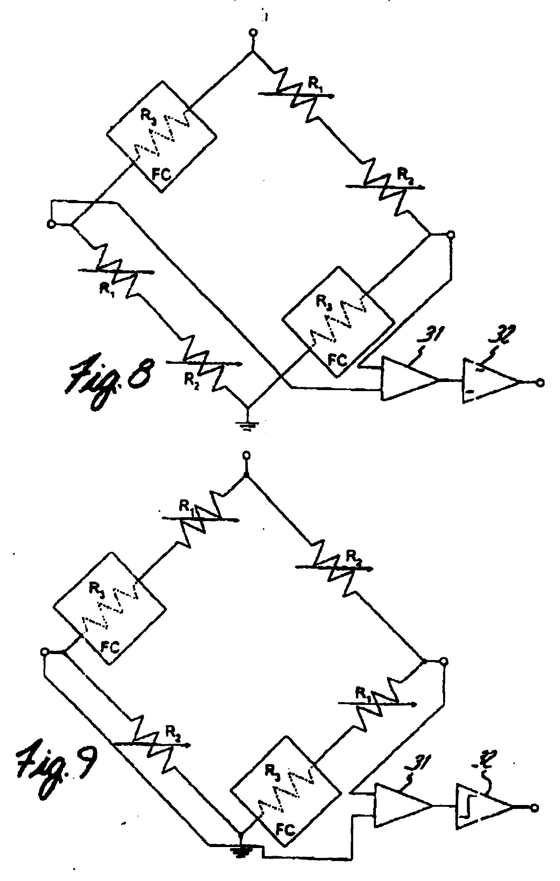

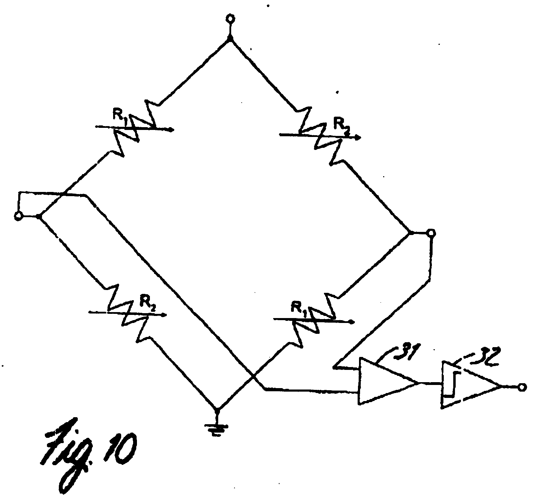

In contrast, the bridge circuit of Figure 9 provides for subtraction of the output signals of axial magnetic field component sensing magnetoresistors R₂ from radial magnetic field component sensing magnetoresistors R_{1.} Here shielded resistors R₃ are provided to be summed with resistors R₁ to equal R₂ to reduce offsets and the effects of temperature coefficients of the sensing resistors, but also to reduce the magnitude of the output signal from R₁ by requiring to be a smaller resistor to, in effect, provide a fractional multiplicative factor with that signal magnitude (the factor ½ ifR₁ equals R₃). The differential output voltage Δvₒ sensed in this circumstance by differential amplifier for one input polarity can be expressed asΔvo = VsR1+R3-R2+ΔR1tc+ΔR3tc-ΔR2tc+ΔR1mr-ΔR2maR1+R2+R3+ΔR1tc+ΔR2tc+ΔR1mr+ΔR2ma. These two resistance changes due to the externally applied magnetic field components axe clearly seen to be subtracted in the bridge circuit to provide the output signal, and again provide essentially the only output signal if resistor R₂ is chosen to have a value equal to the sum of resistors R₁ and R₃. The output is approximately proportional tonFCradial|Hradial|cosθ-FCaxial|Haxial| for properly arranged flux concentrator and sensing resistor geometric relationships, where n is the circuit provided multiplicative factor due to R₃. The circuit of Figure 10 is that of Figure 9 with resistors R₃ shorted to have a zero value so, with R₁ set equal to R₂, the output is proportional to the expression just given with n having a value of 1.

Alternatively, two separate bridge circuits could be provided using the sensor layout arrangements of Figures 6 or 7 with one of these bridge circuits providing an output based on the output signals of radial magnetic field component sensing magnetoresistors R₁ to a differential amplifier, and the other providing an output based on the output signals of axial magnetic field component sensing magnetoresistors R₂ to another differential amplifier. These two bridge output signals could be processed directly by a user on external electronic equipment, or they could be processed by circuits provided in the integrated circuit substrate of the sensing chip in mounting arrangement 18 to combine them in various ways including following the example mathematical expressions given above or others. Such circuits could combine the analog signals in various ways directly by providing these signals to further analog circuits, such as operational amplifier based circuits, or convert these analog signals first to digital signals to be operated on in subsequent digital signal processing circuits.

Although the present invention has been described with reference to preferred embodiments, workers skilled in the art will recognize that changes may be made in form and detail without departing from the spirit and scope of the invention.

## Claims

1. A sensing system for sensing a moveable magnetic field source becoming located sufficiently near a selected position based on a magnetic field generated thereby, said system comprising:a first sensor for providing a first sensor output signal representing magnitudes of a first vectorial component of said magnetic field at a first selected location;a second sensor for providing a second sensor output signal representing magnitudes of a second vectorial component of said magnetic field, differing from said first vectorial component, at a second selected location; anda signal manipulator for receiving said first and second sensor output signals and providing a manipulator result signal based thereon indicative of how near said moveable magnetic field source is to said selected position.
The system of claim 1 wherein said signal manipulator further comprises a threshold determiner receiving said manipulator result signal and providing a manipulator output signal having a first state if said manipulator result signal is within a threshold value and having a second state if said manipulator result signal is beyond a threshold value.
The system of claim 1 wherein said signal manipulator provides said manipulator output signal by additively combining representations of said first and second sensor output signals.
The system of claim 1 wherein said signal manipulator provides said manipulator output signal by a subtractive combining of representations of said first and second sensor output signals.
The system of claim 1 wherein said first and second sensors are mounted on a common substrate at said first and second selected locations,
The system of claim 1 wherein said sensing system is at least in part mounted on a cylindrical shell in which a moveable piston is provided with said magnetic field source.
The system of claim 2 wherein said signal manipulator further comprises a differential amplifier.
The system of claim 3 wherein said first and second sensors are interconnected in a bridge circuit.
The system of claim 4 wherein said first and second sensors are interconnected in a bridge circuit.
The system of claim 5 wherein said first and second sensors are mounted to have the most magnetically sensitive axis of each positioned in a direction perpendicular to that of the other.
The system of claim 5 wherein said substrate includes a monolithic integrated circuit chip having an integrated circuit electrically interconnected to at least one of said first and second sensors.
The system of claim 6 wherein said cylindrical shell and said piston are formed of nonferromagnetic materials.
The system of claim 8 wherein a resistor insensitive to said magnetic field is also mounted on said substrate and interconnected in said bridge circuit.
The system of claim 8 wherein said signal manipulator further comprises a differential amplifier.
The system of claim 9 wherein a resistor insensitive to said magnetic field is also mounted on said substrate and interconnected in said bridge circuit.
The system of claim 9 wherein said signal manipulator further comprises a differential amplifier.
